# EUROPEAN PATENT APPLICATION

(11) **EP 2 980 897 A1**
(43) Date of publication of application: **03.02.2016**
(21) Application number: 14774406.4
(22) Date of filing: 20.03.2014
(51) Int. Cl.: H01M 4/66, H01M 4/02, H01M 4/136, H01M 4/58, H01M 10/058

(54) **COLLECTOR, ELECTRODE STRUCTURE, NONAQUEOUS ELECTROLYTE BATTERY, AND ELECTRICITY STORAGE COMPONENT**

(30) Priority: 29.03.2013 JP 2013074107
(71) Applicant: UACJ Corporation, Tokyo 100-0004 (JP); UACJ Foil Corporation, Chuo-ku, Tokyo 103-0026 (JP)
(72) Inventor: KATAOKA, Tsugio, Kusatsu-shi Shiga 525-0042 (JP); INOUE, Mitsuya, Kusatsu-shi Shiga 525-0042 (JP); YAMABE, Satoshi, Kusatsu-shi Shiga 525-0042 (JP); KATO, Osamu, Tokyo 101-8970 (JP); HONKAWA, Yukiou, Tokyo 101-8970 (JP); SAITO, Sohei, Tokyo 101-8970 (JP); YAEGASHI, Tatsuhiro, Tokyo 101-8970 (JP)
(74) Representative: Gulde & Partner
(86) International application number: PCT/JP2014/057904
(87) International publication number: WO 2014/157010

(57) **Abstract**

Provided is a current collector with low resistance and superior durability, which hardly suffer any change in the appearance of the current collector after the pressing process, and electrode structures, non-aqueous electrolyte batteries, and electrical storage devices using such current collector. A current collector, including an aluminum foil; and a conductive resin layer provided on at least one side of the aluminum foil; wherein the conductive resin layer includes a resin and conductive particles; the aluminum foil has a tensile strength of 180MPa or higher; an indentation hardness at a surface of the conductive resin layer of the current collector is 600MPa or lower; and an area occupying ratio of the conductive particles at the surface of the conductive resin layer is 45% or higher, is provided.

## Description

### TECHNICAL FIELD

The present invention relates to current collectors suitable for various non-aqueous electrolyte batteries such as lithium ion secondary batteries and electrical storage devices, electrode structures, non-aqueous electrolyte batteries, and electrical storage devices.

### BACKGROUND

In recent days, regarding a lithium ion secondary battery, size reduction and higher performance in mobile phones have been anticipated, and thus there has been a strong desire to improve the energy density and to reduce cost of batteries. For example, in Patent Literatures 1 and 2, the load applied during the pressing process of the positive electrode plate was made larger than the conventionally known techniques in an attempt to obtain electrode materials having higher density.

Here, as the positive electrode active material of the lithium ion secondary battery, LiCoO₂, LiNiO₂, LiMn₂O₄ and the like have been used since they have high energy density and high voltage. However, these positive electrode active materials have metal elements with low Clarke number in its composition. Accordingly, they are high in cost, and their supply is unstable. In addition, these positive electrode active materials have relatively high toxicity, and provide large influence to the environment. Therefore, a new positive electrode active material to substitute these positive electrode active materials has been desired.

For example, in Patent Literature 3, lithium phosphate of olivine type such as iron lithium phosphate (LiFePO₄) is used as the positive electrode active material. In particular, LiFePO₄ has iron which is an abundant resource and is low in cost in its composition. Accordingly, it is low in cost compared with the afore-mentioned LiCoO₂, LiNiO₂, LiMn₂O₄ and the like. In addition, influence on the environment is small since toxicity is low. Therefore, usage of LiFePO₄ as the active material has been expected.

When the lithium phosphate of olivine type is used as the positive electrode active material for non-aqueous electrolyte batteries, the desorption/insertion reaction of lithium during charge/discharge of the battery is slow. Accordingly, the electronic conductivity is extremely low, which is problematic. In order to solve these problems, it has been said that it is effective to refine the LiFePO₄ particles and coat the surface of the particles with a conductive substance to increase the reaction surface area.

### CITATION LIST

### PATENT LITERATURE

Patent Literature 1: JP 2008-150651A
Patent Literature 2: JP 2011-26656A
Patent Literature 3: JP 2010-113874A

### SUMMARY OF THE INVENTION

### TECHNICAL PROBLEM

However, the afore-mentioned conventionally known techniques had room for improvement in view of the following points.

First, regarding the techniques disclosed in Patent Literatures 1 and 2, pressing with higher load would cause stretch and curve in the positive electrode current collector, resulting in obstructions such as rupture and the like of the positive electrode current collector in the following manufacturing process. Therefore, aluminum foil having high strength is used. As a result, the active material would not be able to bite into the aluminum foil having high strength, resulting in increase of the resistance at the electrode layer/current collector interface.

Second, regarding the technique disclosed in Patent Literature 3, the active material could not bite into the aluminum since the pressure during pressing was dispersed due to refinement of the LiFePO₄ particles. Accordingly, the contact point (area) would decrease and the resistance at the electrode layer/current collector interface would increase, which could be a new problem.

The present invention has been made by taking the afore-mentioned circumstances into consideration. An object of the present invention is to provide a current collector with low resistance and superior durability, which hardly suffer any change in the appearance of the current collector after the pressing process, and electrode structures, non-aqueous electrolyte batteries, and electrical storage devices using such current collector.

### SOLUTION TO PROBLEM

According to the present invention, a current collector comprising an aluminum foil; and a conductive resin layer provided on at least one side of the aluminum foil, is provided. Here, the conductive resin layer comprises a resin and conductive particles. In addition, the tensile strength of the aluminum allow foil is 180MPa or higher. Further, an indentation hardness at a surface of the conductive resin layer of the current collector is 600MPa or lower. An area occupying ratio of the conductive particles at the surface of the conductive resin layer is 45% or higher.

According to such constitution of the current collector, the strength of the aluminum foil, indentation hardness at the surface of the conductive resin layer, and the area occupying ratio of the conductive particles are in an appropriate range. Therefore, the active material can be made to bite into the conductive resin layer moderately during the pressing process performed when manufacturing the electrode structure. Accordingly, the usage of such current collector can decrease the resistance at the current collector/active material layer interface of the electrode structure for non-aqueous electrolyte batteries. Thus, the current collector of the present invention can achieve thin aluminum foil, and allow steady manufacture of electrode structures with high quality.

According to the present invention, an electrode structure, comprising the afore-mentioned current collector; and an active material layer provided on the conductive resin layer of the current collector, the active material layer containing active material particles, is provided. Here, the median size of the active material particles is 5µm or less.

According to such constitution of the electrode structure, the resistance at the current collector/active material layer interface can be lowered even when the median size of the active material particles is minute, since the afore-mentioned current collector is used. Therefore, the electrode structure itself can be made thin. In addition, when such electrode structure is used for the non-aqueous electrolyte batteries or the electrical storage devices, non-aqueous electrolyte batteries or electrical storage devices having superior high rate characteristics and superior durability can be manufactured.

According to the present invention, non-aqueous electrolyte batteries or electrical storage devices using such current collector, are provided.

According to such constitution, non-aqueous electrolyte batteries or electrical storage devices having superior high rate characteristics and superior durability can be obtained since the afore-mentioned electrode structure is used.

### EFFECT OF THE INVENTION

According to the present invention, a current collector with low resistance and superior durability, which hardly suffer any change in the appearance of the current collector after the pressing process, and electrode structures, non-aqueous electrolyte batteries, and electrical storage devices using such current collector, are provided.

### BRIEF DESCRIPTION OF THE DRAWINGS

[FIG. 1] FIG. 1 is a cross-sectional view showing a structure of a current collector according to one embodiment of the present invention.
[FIG. 2] FIG. 2 is a cross-sectional view showing a structure of an electrode structure manufactured by using the current collector according to one embodiment of the present invention.
[FIG. 3] FIG. 3 is a schematic diagram showing the relationship between the conductive resin layer and the active material regarding the electrode structure according to one embodiment of the present invention.
[FIG. 4] FIG. 4 is a schematic diagram showing the relationship between the conductive resin layer and the active material regarding the electrode structure of the Comparative Example where the area occupying ratio of the conductive particles in the conductive resin layer is lower than 45%.
[FIG. 5] FIG. 5 is a schematic diagram showing the relationship between the conductive resin layer and the active material regarding the electrode structure of the Comparative Example where the conductive resin layer has a hardness of more than 600MPa.
[FIG. 6] FIG. 6 is a view related to the measurement of the area occupying ratio of the conductive particles at the surface of the conductive resin layer regarding the current collector according to one embodiment of the present invention.

### DESCRIPTION OF EMBODIMENTS

Hereinafter, the embodiments of the present invention will be explained with reference to the drawings. Here, in all of the drawings, the same symbols are provided for the similar constitutional elements, and the explanations for them are omitted where applicable. In addition, "A to B" in the present specification shall mean "A or more and B or less".

### <Current Collector>

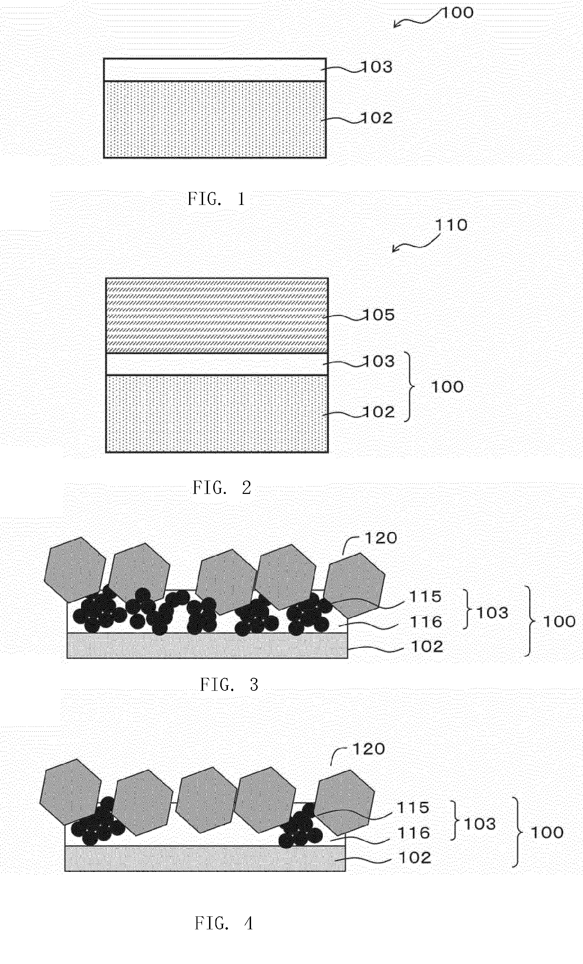

FIG. 1 is a cross-sectional view showing a structure of current collector 100 according to the present embodiment. The current collector 100 of the present embodiment is the one used for the various non-aqueous electrolyte batteries and the like such as the lithium ion secondary batteries, and for the electrical storage devices. The current collector 100 can be used in a similar manner as the conventionally known current collectors. Here, the aluminum foil 102 is used, and a conductive resin layer 103 is further provided on the surface of the aluminum foil 102. The conductive resin layer 103 is a layer different from the active material layer, as described later.

In addition, FIG. 2 is a cross-sectional view showing a structure of an electrode structure manufactured by using the current collector of the present embodiment. The electrode structure is structured by further forming the active material layer 105 on the side of the conductive resin layer 103 of the current collector 100 of the present embodiment.

As shown in FIG. 1, the current collector 100 of the present embodiment comprises a conductive resin layer 103 having conductivity on at least one side of the aluminum foil 102.

In addition, as shown in FIG. 2, the active material layer 105 is provided on the conductive resin layer 103 of the current collector 100 of the present embodiment, thereby providing the electrode structure 110 suitable for the non-aqueous electrolyte batteries such as the lithium ion secondary batteries.

Since the hardness of the conductive resin layer 103 of the current collector 100 according to the present embodiment is appropriate, the active material particles 102 bites into the conductive resin layer 103 when the pressing process is performed after the forming of the active material layer 105 on the conductive resin layer 103 of the current collector 100 (refer to FIG. 3), and the contact area between the active material particles 120 and the conductive particles 115 increases. Accordingly, the resistance at the conductive resin layer 103/active material layer 105 interface is reduced. Therefore, the non-aqueous electrolyte batteries using the current collector 100 for the lithium ion secondary batteries of the present embodiment is low in resistance and can achieve superior high rate characteristics and superior durability.

The aluminum foil 102 of the present embodiment can suitably be used as the current collector 100 for the electrode structure 110 regarding the positive electrode of non-aqueous electrolyte batteries. There is no particular limitation regarding the aluminum foil 102 of the present embodiment. Here, various aluminum foils of pure aluminum type, such as JIS A1085 and JIS A3003 can be used. In the present specification, aluminum means aluminum and aluminum alloy.

In addition, the thickness of the aluminum foil 102 is adjusted in accordance with the usage, and thus there is no particular limitation. Here, the thickness is preferably 5 to 100 µm. When the thickness is less than 5 µm, the strength of the aluminum foil would be insufficient, and thus it becomes difficult to perform pressing process after forming the active material layer 105 on the conductive resin layer 103 of the current collector 100. Accordingly, there are cases where the manufacture of the electrode structure 110 becomes difficult. On the other hand, when the thickness of the aluminum foil 102 exceeds 100 µm, for example in a case where the aluminum foil 102 is used for the electrode structure 110 of the positive electrode of the non-aqueous electrolyte battery, it becomes necessary to make the other components, particularly the active material layer 105, thin. That is, when the aluminum foil 102 is used for the electrode structure 110 of the positive electrode of the non-aqueous electrolyte battery, the thickness of the aluminum foil 102 would increase the volume, resulting in insufficient capacity. Accordingly, the thickness of the active material layer 105 need be made thin.

In the present embodiment, the tensile strength of the aluminum foil 102 is 180MPa or higher. The tensile strength of the aluminum foil 102 is preferably 250MPa or higher. The tensile strength of the aluminum foil is, for example, 180, 181, 190, 200, 210, 220, 230, 240, 250, 260, 270, 280, 290, 300, 350, and 400 MPa, and can be in the range of two values selected from these.

As in the present embodiment, when the aluminum foil 102 has the tensile strength of 180MPa or higher, stretch and curve in the positive electrode current collector 100 is hardly observed in its appearance, even when the active material layer 105 is pressed (usually with linear pressure of 100 to 200 kg/cm) with the current collector 100 during the manufacture of the positive electrode plate (for example, electrode structure 110 of the positive electrode of the non-aqueous electrolyte battery). Therefore, an electrode structure 110 having high density can be obtained.

The tensile strength of the aluminum foil 102 can be adjusted in accordance with conventionally known methods. For example, the component composition of the aluminum foil 102 can be altered to adjust the tensile strength.

In the present embodiment, as shown in FIG. 1, the conductive resin layer 103 comprising the resin layer 116 and the conductive particles 115 are formed on at least one side of the aluminum foil 102. Here, regarding the current collector of the present embodiment, the conductive resin layer 103 need be formed on at least one side of the aluminum foil 102. The conductive resin layer 103 can also be formed on both sides of the aluminum foil 102. In addition, the conductive resin layer 103 can comprise additives in addition to the resin layer 116 and the conductive particles 115.

There is no particular limitation regarding the method for forming the conductive resin layer 103. Here, it is recommended that the median size (D50) of the secondary particles of the conductive particles described later is adjusted. Specifically, a method involving dissolving the resin in solvent, adding the conductive particles 115 and mixing the resulting mixture to obtain a paste, and coating the paste on the aluminum foil 102 followed by drying; a method involving dispersing the resin in water as emulsion particles, adding the conductive particles 115 and mixing the resulting mixture to obtain a paste, and coating the paste on the aluminum foil 102 followed by drying; and a method involving mixing the conductive particles 115 and fine powder particles of the resin to obtain a mixture, coating the mixture on the aluminum foil 102, and heating the resin to fuse the resin; can be mentioned. Preferably, the method involving dissolving the resin in solvent, adding the conductive particles 115 and mixing the resulting mixture to obtain a paste, and coating the paste on the aluminum foil 102 followed by drying, can be mentioned.

The resin constituting the conductive resin layer 103 is not particularly limited. Here, a fluorine-based resin, a polyolefin resin, styrene-butadiene rubber (SBR), polyimide, polyamide imide (PAI), cellulose and derivatives thereof, chitin and derivatives thereof, chitosan and derivatives thereof, acrylic resin, butyral resin, melamine resin, and epoxy resin are preferable. As such, the resistance at the current collector/active material layer interface can be made low, and the high rate characteristics can be improved, when the current collector 100 is used in the lithium ion secondary battery. Here, the afore-mentioned resins can be used alone or can be used as a combination of 2 or more resins (for example, mixed or copolymerized).

There is no particular limitation regarding the conductive particles 115 structuring the conductive resin layer 103. Here, metal fine particles, carbon particles and the like can be used. Among these, carbon particles are preferable, since they have superior conductivity and are low in cost.

There is no particular limitation regarding the carbon particles. Here, acetylene black (AB), Ketjen black, vapor grown carbon fiber, graphite (black lead) and the like can be used. The ones having a resistance in the form of powder as a pressurized powder body by 100% of 1 x 10⁻¹ Ω·cm or lower are preferable. The afore-mentioned carbon particles can be used in combination as necessary. There is no particular limitation regarding the size of the particles. Here, the size of the particles in the range of 10 to 100 nm is generally preferable.

The conductive particles 115 preferably aggregate in the conductive resin layer 103 and form secondary particles. In addition, there is no particular limitation regarding the median size (D50) of the secondary particles of the conductive particles 115, and 1 to 10 µm is preferable. Examples of the median size (D50) of the secondary particles of the conductive particles 115 are 1.0, 2.0, 3.0, 4.0, 5.0, 6.0, 7.0, 8.0, 9.0, and 10.0 µm, and can be in the range of two values selected from these.

When the median size (D50) of the secondary particles of the conductive particles 115 is less than 1 µm, there are cases where the conductivity of the conductive resin layer 103 becomes insufficient. This would result in insufficient decrease in the resistance at the current collector 100/ active material layer 105 interface. On the other hand, when the median size (D50) of the secondary particles of the conductive particles 115 exceeds 10 µm, the adhesion property at the aluminum foil 102/conductive resin layer 103 interface and at the conductive resin layer 103/active material layer 105 interface are degraded, resulting in increase in resistance due to contact failure.

In the present embodiment, D50 is a particle diameter corresponding to 50% in the cumulative distribution by volume. The particle diameter cumulative distribution can be measured by common laser diffraction method and dynamic light scattering.

In the present embodiment, the area occupying ratio of the conductive particles 115 at the surface of the conductive resin layer 103 is 45% or higher. Preferably, the ratio is 55% or higher. Examples of the area occupying ratio of the conductive particles 115 at the surface of the conductive resin layer 103 are 45, 50, 51, 60, 65, 70, 80, 90, and 99% or higher, and can be in the range of two values selected from these.

When the area occupying ratio of the conductive particles 115 at the surface of the conductive resin layer 103 is lower than 45%, as shown in FIG. 4, sufficient conductivity cannot be obtained even when the conductive particles 115 exist in the conductive resin layer 103. Accordingly, the resistance at the current collector 100/active material layer 105 interface cannot be made sufficiently low. That is, it is necessary to control the area occupying ratio of the conductive particles 115 at the surface of the conductive resin layer 103.

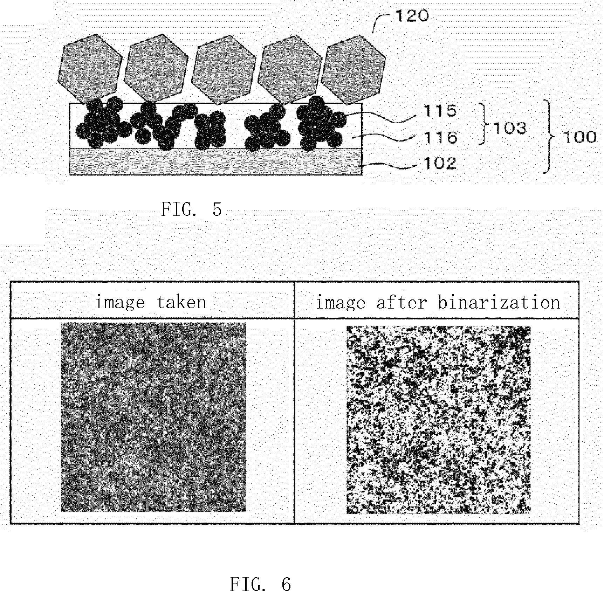

The electrode structure of the present embodiment is, as shown in FIG. 2, structured by providing the active material layer 105 on one side of the current collector 100. When the conductive resin layer 103 is formed on both sides of the aluminum foil 102, the active material layer 105 can be provided on the other side. Further, FIG. 3 is a schematic diagram showing the relationship between the conductive resin layer and the active material regarding the electrode structure of the present embodiment. FIG. 4 is a schematic diagram showing the relationship between the conductive resin layer and the active material regarding the electrode structure of the Comparative Example described later, where the area occupying ratio of the conductive particles in the conductive resin layer is lower than 45%. Further, FIG. 5 is a schematic diagram showing the relationship between the conductive resin layer and the active material regarding the electrode structure of the Comparative Example described later, where the conductive resin layer has a hardness of more than 600MPa.

In the present embodiment, the indentation hardness at the surface of the conductive resin layer 103 of the current collector 100 is 600MPa or lower, preferably 450MPa or lower. Examples of the indentation hardness at the surface of the conductive resin layer 103 of the current collector 100 are 5, 10, 25, 50, 100, 150, 200, 250, 300, 350, 400, 420, 440, 450, 500, 550, and 600MPa, and can be in the range of two values selected from these. When the indentation hardness at the surface of the conductive resin layer 103 of the current collector 100 exceeds 600MPa, as shown in FIG. 5, the amount of biting of the active material particles 120 into the conductive resin layer 103 would be insufficient, and thus the resistance at the active material layer 105/current collector 100 interface cannot be lowered sufficiently.

Here, the indentation hardness at the surface of the conductive resin layer 103 of the current collector 100 can be adjusted by altering the drying conditions of the conductive resin layer 103 and the like, and the formulation amount of the resin for the conductive resin layer and the conductive particles 115.

In the present embodiment, the measurement of the indentation hardness at the surface of the conductive resin layer 103 of the current collector 100 can be performed by a conventionally known method. There is no particular limitation regarding the thickness of the conductive resin layer 103. Here, since the thickness is as thin as 1.0 to 20 µm, an ultramicro indentation hardness tester which applies small measuring load can be used for the measurement.

Traditionally, the resistance at the interface of the aluminum foil 102 as the current collector and the active material layer 105 was lowered to a practical degree, by the pressing process performed mainly for adjusting the electrode density, since the pressing process allowed the active material to bite into the aluminum foil 102, resulting in increase in the contact area. However, since the indentation hardness at the surface of the aluminum foil 102 generally exceeds 600MPa, usage of active material particles 120 having a median size of 5 µm or less would make it difficult for the active material particles 120 to directly bite into the aluminum foil 102 having a hard surface, since the pressure during the pressing process is distributed. Accordingly, the resistance at the active material layer 105/current collector 100 interface tended to increase.

In contrast, in the present embodiment, the conductive resin layer 103 exists in between the aluminum foil 102 as the substrate and the active material layer 105, the conductive resin layer 103 being formed with a resin softer than the substrate. Here, since the indentation hardness at the surface of the conductive resin layer 103 is low as 600MPa or lower, even the usage of active material particles having a small median size of 5 µm or less would allow the active material particles 120 to sufficiently bite into the conductive resin layer 103 having softer surface than the aluminum foil 102, thereby increasing the contact area when the pressing is performed after forming the active material layer 105 on the conductive resin layer 103 of the current collector 100. Accordingly, the resistance at the active material layer 105/current collector 100 can be lowered to a practical degree.

### <Manufacturing Method of Current Collector>

There is no particular limitation regarding the manufacturing method of the current collector 100 of the present embodiment, so long as the conductive resin layer 103 is formed on at least one side of the aluminum foil 102. For example, the method can involve dissolving the resin for the conductive resin layer in a suitable solvent, followed by adding the conductive particles 115 and mixing the resulting mixture to give a paste. The paste can then be coated on the aluminum foil 102 and dried. Another method involving mixing of the conductive particles 115 and the resin in the form of fine powder to give a mixture, coating the mixture on the aluminum foil 102, and heating the resin to fuse the resin, can be mentioned.

Among these, the method involving dissolving the resin in solvent, adding the conductive particles 115 and mixing the resulting mixture to obtain a paste, and coating the paste on the aluminum foil 102 followed by drying, is preferably used. There is no particular limitation regarding the solvent used here, so long as it can disperse the conductive particles 115 in the resin for the conductive resin layer. When the carbon particles are used as the conductive particles 115, it is preferable to adjust the particle diameter (median size) D50 of the aggregate of the carbon particles to be in the range of 1 to 10 µm, when the conductive resin coating is prepared by dispersing and mixing the resin and the carbon particles in a suitable solvent.

In addition, there is no particular limitation regarding the method for coating the paste containing the conductive particles 115. Here, conventionally known methods such as cast method, bar coater method, dip method, and gravure coat method can be used. There is no particular limitation regarding the method for drying the paste, and drying can be carried out by heat treatment in a circulating hot air oven.

In addition, it is effective to perform a pretreatment regarding the aluminum foil 102 before forming the conductive resin layer 103, in order to improve the adhesion property. In particular, when the aluminum foil 102 manufactured by rolling is used, there are cases where the rolling oil or the abrasion powders are remaining, causing decrease in the adhesion property of the aluminum foil 102 with the conductive resin layer 103. In such case, the rolling oil or the abrasion powders can be removed by degreasing for example, and improve the adhesion property between the conductive resin layer 103 and the aluminum foil 102. In addition, adhesion property between the conductive resin layer 103 and the aluminum foil 102 can be improved also by a dry activation treatment such as the corona discharge treatment.

### <Electrode Structure>

The electrode structure 110 of the present embodiment is, as shown in FIG. 2 for example, obtained by forming the active material layer 105 on the conductive resin layer 103 of the current collector 100 of the present embodiment. That is, the electrode structure 110 of the present embodiment comprises the current collector 100, and the active material layer 105 containing the active material particles 120, the active material layer 105 being formed on the conductive resin layer 103 of the current collector 100. Since the electrode structure 110 is provided with the active material layer 105 containing the active material particles 120, the active material layer 105 being formed on the conductive resin layer 103 of the current collector 100 using the afore-mentioned aluminum foil 102, the electrode structure 110 can be used for manufacturing non-aqueous electrolyte batteries having both of superior high rate characteristics and superior durability.

There is no particular limitation regarding the binder resin structuring the active material layer 105. Here, one or more resins selected from the group consisting of a fluorine resin, a polyolefin resin, SBR, polyimide, PAI, cellulose and derivatives thereof, chitin and derivatives thereof, chitosan and derivatives thereof, an acrylic resin, a butyral resin, a melamine resin, and an epoxy resin can be used. The selected resin can be used alone, or can be used in combination by mixing or copolymerizing. By using these binder resins, the adhesion property of the active material particles 120 to the conductive resin layer 103 can be further improved.

There is no particular limitation regarding the active material particles 120 of the present embodiment. Here, when the active material particles 120 are used for the electrode structure of the positive electrode, particles containing lithium nickel oxide, lithium cobalt oxide, lithium manganese oxide, olivine type lithium phosphate and the like as its component can be mentioned. It is particularly preferable that the particles contain olivine type lithium phosphate as its component. This is since the high rate characteristics can be dramatically improved compared with the case where the conductive resin layer 103 is not provided, when the olivine type lithium phosphate is used as the positive electrode active material of the lithium ion secondary battery. Therefore, the olivine type lithium phosphate having lower high rate characteristics compared with other active materials can be used when high rate characteristics are desired. By achieving the high rate characteristics, the olivine type lithium phosphate which has superior heat stability and is relatively low in cost can be explored in the usage for active material.

As the olivine type lithium phosphate, iron lithium phosphate (LiFePO₄) is preferably used. Regarding active materials having the olivine type crystalline structure, LiFePO₄ has high electron/ion conductivity, and has superior high rate characteristics. Since iron which is high in the amount of production and low in cost compared with other active materials is used, the cost of the battery can be lowered. Further, in the present embodiment, one type of the active material particles 120 can be used alone or two or more types can be used.

There is no particular limitation regarding the median size (D50) of the active material particles 120 of the present embodiment. Here, the median size (D50) is preferably 5 µm or less, more preferably 3 µm or less. Examples of the median size (D50) of the active material particles 120 are, 0.01, 0.05, 0.1, 0.2, 0.3, 0.39, 0.4, 0.41, 0.5, 0.6, 0.7, 0.8, 0.9, 1.0, 1.1, 2.0, 3.0, 4.0, 4.9, and 5.0 µm or less, and can be in the range of two values selected from these.

When the median size (D50) of the active material particles 120 is 5 µm or less, the contact area between the active material particles 120 and the conductive resin layer 103 increases, thereby further improving the electronic conductivity. On the contrary, when the median size (D50) of the active material particles 120 exceeds 5 µm, the contact area between the active material particles 120 and the conductive resin layer 103 would not increase, thereby resulting in cases where the electronic conductivity cannot be improved. In particular, when the olivine type lithium phosphate is used as the active material particles 120, the low electronic conductivity of the olivine type lithium phosphate can cause unfavorable effect on the high rate characteristics, and polarization can increase during high rate discharging, resulting in remarkable degradation in battery characteristics.

Here, when the active material particles 120 have a particle diameter exceeding 5 µm, the contact area can be increased even when the conductive resin layer 103 is not provided, since the active material particles 120 directly bite into the aluminum foil 102 when the current collector 100 and the active material layer 105 are pressed. That is, in order to lower the resistance at the current collector 100/active material layer 105 interface, the strength of the aluminum foil 102 need be lowered so that the active material particles 120 can directly bite into the aluminum foil 102. Accordingly, the strength of the aluminum foil 102 is weakened, thereby resulting in cases where the aluminum foil 102 cannot bear the high-pressure pressing for adjusting the electrode density. Therefore, it becomes difficult to obtain the electrode structure 110 having high density.

Here, the median size (D50) of the active material particles 120 can be measured using general methods such as laser diffraction method and dynamic light scattering.

Then, when the active material layer 105 is formed on the conductive resin layer 103 of the current collector 100, for example, the afore-mentioned binder resin is first dissolved in a solvent, followed by adding the active material particles 120 and a conducting assistant such as conductive particles, and then mixing the resulting mixture to obtain an active material slurry. Subsequently, the slurry is coated on the current collector 100 followed by drying.

Subsequently, in order to increase the electrode density, pressing process is performed after forming the active material layer 105 on the current collector 100. The higher the pressure during pressing process, the more increase in the electrode density. In the present embodiment, the electrode structure 110 can be obtained by performing pressing process after forming the active material layer 105 on the conductive resin layer 103 of the current collector 100.

### <Non-aqueous Electrolyte Battery>

The non-aqueous electrolyte batteries of the present embodiment is structured with the afore-mentioned electrode structure 110, and is obtained by casing the contents of batteries such as a separator, electrolyte solution and the like in a casing. Here, lithium ion secondary batteries and lithium ion capacitors can be mentioned for example. The non-aqueous electrolyte batteries of the present embodiment is provided with the afore-mentioned electrode structure 110, and thus superior high rate characteristics and superior durability can be obtained. When the non-aqueous electrolyte battery is a lithium ion secondary battery, the afore-mentioned electrode structure 110 is used as the electrode structure for the positive electrode, and an electrode structure for the negative electrode suitable for the lithium ion secondary battery is prepared separately. Then, a separator impregnated with the electrolyte solution is sandwiched in between the electrode structure 110 for the positive electrode and the electrode structure for the negative electrode, thereby structuring the lithium ion secondary battery. As the electrolyte solution and the separator for the lithium ion secondary battery, conventionally known ones can be used. For example, as the electrolyte solution, the one prepared by dissolving LiPF₆ or LiBF₄ as the electrolyte in a solvent mixture of EC (ethylene carbonate) and EMC (ethyl methyl carbonate) can be used. As the separator, a film having a polyolefin microporous can be used.

In the present embodiment, conventionally known methods can be used for measuring the high rate characteristics of the non-aqueous electrolyte batteries. For example, since the voltage of the battery tends to decrease when the discharging rate increases due to the internal resistance of the battery, high rate characteristics can be evaluated by comparing the discharge capacity at low rate and high rate.

In the present embodiment, there is no particular limitation regarding the measurement method of the durability of the non-aqueous electrolyte batteries. Here, conventionally known methods can be used. For example, a cycle test can be conducted. The cycle test is performed to degrade the battery. First, the surface resistance of the initial electrode is measured, and then the high rate characteristics of the initial battery are measured. Then, charge and discharge are repeated with the battery, thereby subjecting the battery under the cycle test to degrade the battery. Subsequently, the high rate characteristics are measured with the battery after the cycle test, and the battery is further disassembled to take out the electrode and measure the surface resistance thereof. The durability of the battery can be evaluated by comparing the initial surface resistance and the initial high rate characteristics with the surface resistance and the high rate characteristics after the cycle test, respectively.

The embodiments of the present invention have been described with reference to the Drawings. Here, they are merely an exemplification of the present invention, and the present invention can adopt various constituents other than those mentioned above. The present invention shall not be limited to these embodiments.

For example, in the afore-mentioned explanation, the electrode structure for the positive electrode was explained. However, there is no intention to exclude the usage of the current collector 100 of the afore-mentioned embodiment for the electrode structure of the negative electrode. When the current collector of the afore-mentioned embodiment is used for the electrode structure of the negative electrode, an active material layer suitable for the electrode structure of the negative electrode shall be provided by using active material particles other than the one mentioned above (for example, lithium titanate).

For example, in the afore-mentioned explanation, the electrode structure of non-aqueous electrolyte batteries was explained. However, there is no intention to exclude the usage of the current collector 100 of the afore-mentioned embodiment for the electrode structure of the electrical storage device such as the lithium ion capacitors and the like. When the current collector 100 of the afore-mentioned embodiment is used for the electrode structure of the electrical storage device, electrode material layer suitable for the electrode structure of the electrical storage device shall be provided on the current collector 100.

By using the electrode structure having the electrode material layer formed on the conductive resin layer 103 of the current collector 100 of the present embodiment, electrical storage device such as the electrical double layer capacitor, lithium ion capacitor and the like can be manufactured.

Here, as the electrode material layer, the ones conventionally used for the electrode material of the electrical double layer capacitor and the lithium ion capacitor can be used. For example, carbon fibers and carbon powders such as activated charcoal and black lead can be used. As the binder, PVDF (polyvinylidene difluoride), SBR (stylene-butadiene rubber), PTFE (polytetraethylene resin) can be used for example.

As the electrolyte solution and the separator for the electrical storage device, conventionally known ones can be used. For example, as the electrolyte solution, carbonates, esters and lactones can be used as the non-aqueous solvents. As for the electrolyte, tetraethylammonium salt, triethylmethylammonium salt and the like can be used as the positive ion, and hexafluorophosphate salt, tetrafluoroborate salt and the like can be used as the negative ion. As for the separator, a film having a polyolefin microporous and non-woven fabric can be used for example.

### EXAMPLES

Hereinafter, the present invention will be described in detail with reference to Examples and Comparative Examples. However, the present invention shall not be limited to these Examples.

### <Example 1>

### <Preparation of Current Collector>

An aluminum alloy foil of 15 µm thickness having a tensile strength of 265 MPa was prepared. Then, a nitrocellulose-based resin solution as the resin and acetylene black (AB) as the conductive material (conductive particles) were adjusted so that the mass ratio of solids of the resin for conductive resin layer : conductive material would be 60 : 40. The disperser/kneader apparatus (name of apparatus: T. K. COMBI MIX, available from PRIMIX Corporation) was used to obtain the conductive resin solution having its particle diameter adjusted. This conductive resin solution was coated on one side of the aluminum foil, followed by drying with heated air. Accordingly, the conductive resin layer was formed, and the current collector was prepared.

### <Preparation of Electrode Structure>

Iron lithium phosphate having a median size (D50) of 2.8 µm was prepared as the positive electrode active material. Then, PVDF (polyvinylidene difluoride) solution having PVDF dissolved in NMP (N-methyl pyrrolidone) and carbon as the conducting assistant were mixed so that the mass ratio of the solids would be as LiFePO₄/AB/PVDF=89.5/5/5.5. The mixture was then uniformly dispersed using a high-speed mixer (name of apparatus: FILMIX, available from PRIMIX Corporation), thereby obtaining the active material slurry. Subsequently, the slurry was coated on the current collector, followed by drying. The density was increased by roll pressing, thereby forming the electrode layer having a thickness of approximately 60 µm to obtain the electrode structure.

Next, a negative electrode active material paste (mesocarbon microbeads (MCMB)/AB/PVDF = 93/2/3) was coated on a copper foil having a thickness of 10 µm, followed by drying. The density was increased by roll pressing, thereby forming the electrode layer having a thickness of 5 µm and density of 1.30 g/cm³ to obtain the electrode structure.

### <Preparation of Monolayer Laminated Battery>

The polyolefin microporous separator was sandwiched in between these electrode structures, and were cased in a battery case, thereby obtaining the monolayer laminated battery. Here, as the electrolyte solution, 1M-LiPF₆, ethylene carbonate (EC)/methyl ethyl carbonate (MEC) = 3/7 was used.

### <Example 2>

### <Preparation of Current Collector>

An aluminum alloy foil of 15 µm thickness having a tensile strength of 265 MPa was prepared. Then, PVDF resin solution as the resin and acetylene black as the conductive material were adjusted so that the mass ratio of solids of the resin for conductive resin layer : conductive material would be 70 : 30. The disperser/kneader apparatus (name of apparatus: T. K. COMBI MIX, available from PRIMIX Corporation) was used to obtain the conductive resin solution having its particle diameter adjusted. This conductive resin solution was coated on one side of the aluminum foil, followed by drying with heated air. Accordingly, the conductive resin layer was formed, and the current collector was prepared. This current collector was used to prepare the electrode structure and the monolayer laminated battery in a similar manner as Example 1.

### <Example 3>

### <Preparation of Current Collector>

An aluminum alloy foil of 15 µm thickness having a tensile strength of 195 MPa was prepared. Then, a chitosan-based resin solution as the resin and acetylene black as the conductive material were adjusted so that the mass ratio of solids of the resin for conductive resin layer : conductive material would be 67 : 33. The disperser/kneader apparatus (name of apparatus: T. K. COMBI MIX, available from PRIMIX Corporation) was used to obtain the conductive resin solution having its particle diameter adjusted. This conductive resin solution was coated on one side of the aluminum foil, followed by drying with heated air. Accordingly, the conductive resin layer was formed, and the current collector was prepared. This current collector was used to prepare the electrode structure and the monolayer laminated battery in a similar manner as Example 1.

### <Examples 4, 5>

Current collectors, electrode structures, and monolayer laminated batteries were prepared in a similar manner as Example 3, except that the tensile strength of the aluminum alloy foils were different.

### <Examples 6, 7>

Current collectors, electrode structures, and monolayer laminated batteries were prepared in a similar manner as Example 1, except that the positive electrode active materials having a different particle diameter were used.

### <Examples 8, 9>

Current collectors, electrode structures, and monolayer laminated batteries were prepared in a similar manner as Example 1, except that the conductive resin solutions, the conductive materials of the conductive resin solutions having a different particle diameter, were used.

### <Comparative Example 1>

Electrode structure and monolayer laminated battery were prepared in a similar manner as Example 1, except that an aluminum alloy foil of 15 µm thickness having a tensile strength of 163 MPa without the conductive resin layer was used as the current collector.

### <Comparative Example 2>

Current collector, electrode structure, and monolayer laminated battery were prepared in a similar manner as Example 1, except that an aluminum alloy foil of 15 µm thickness having a tensile strength of 163 MPa was used.

### <Comparative Example 3>

Electrode structure and monolayer laminated battery were prepared in a similar manner as Example 1, except that an aluminum alloy foil of 15 µm thickness having a tensile strength of 265 MPa without the conductive resin layer was used as the current collector.

### <Comparative Example 4>

Current collector, electrode structure, and monolayer laminated battery were prepared in a similar manner as Example 3, except that a positive electrode active material having a different particle diameter was used.

### <Comparative Example 5>

### <Preparation of Current Collector>

An aluminum alloy foil of 15 µm thickness having a tensile strength of 265 MPa was prepared. Then, a conductive resin solution comprising a PAI-based resin solution and a conductive material was prepared. This conductive resin solution was coated on one side of the aluminum foil, followed by drying with heated air. Accordingly, the conductive resin layer was formed, and the current collector was prepared. The electrode structure and the monolayer laminated battery were prepared in a similar manner as Example 1.

### <Comparative Example 6>

Current collector, electrode structure, and monolayer laminated battery were prepared in a similar manner as Example 1, except that the indentation hardness of the conductive resin layer was out of the range of the present invention.

### <Comparative Example 7>

Current collector, electrode structure, and monolayer laminated battery were prepared in a similar manner as Example 2, except that the indentation hardness of the conductive resin layer was out of the range of the present invention.

### <Comparative Example 8>

Current collector, electrode structure, and monolayer laminated battery were prepared in a similar manner as Example 3, except that the indentation hardness of the conductive resin layer was out of the range of the present invention.

### <Comparative Example 9>

Current collector, electrode structure, and monolayer laminated battery were prepared in a similar manner as Example 1, except that the mass ratio of the solids of the nitrocellulose-based resin and the conductive material were adjusted so as to satisfy the relation of resin for conductive resin layer : conductive material = 67 : 33, and that the area occupying ratio of the conductive particles was out of the range of the present invention.

**[Table 1]**

| | | positive electrode active material | | current collector | | | | | |
|---|---|---|---|---|---|---|---|---|---|
| | | type | particle diameter (D50) | tensile strength of aluminum foil Mpa | current collector with conductive resin layer | | | particle diameter of conductive material | area occupying ratio of conductive particle 5% |
| | | | | | resin for conductive resin layer | resin for conductive resin layer : conductive material | indentation hardness | | |
| | No. | | | | | wt% | MPa | (D50) | |
| | 1 | LFP | 2.8 | 265 | nitrocellulose based resin | 60:40 | 440 | 5.6 | 81 |
| | 2 | LFP | 2.8 | 265 | PVDF resin | 70:30 | 250 | 3.3 | 98 |
| | 3 | LFP | 2.8 | 195 | chitosan based resin | 67:33 | 200 | 3.6 | 62 |
| | 4 | LFP | 2.8 | 265 | chitosan based resin | 67:33 | 200 | 3.6 | 64 |
| Example | 5 | LFP | 2.8 | 302 | chitosan based resin | 67:33 | 230 | 3.6 | 58 |
| | 6 | LFP | 0.4 | 265 | nitrocellulose based resin | 60:40 | 440 | 5.6 | 81 |
| | 7 | LFP | 6.6 | 265 | nitrocellulose based resin | 60:40 | 440 | 5.6 | 81 |
| | 8 | LFP | 2.8 | 265 | nitrocellulose based resin | 60:40 | 430 | 0.7 | 68 |
| | 9 | LFP | 2.8 | 265 | nitrocellulose based resin | 60:40 | 400 | 15.3 | 92 |
| | 1 | LFP | 2.8 | 163 | - | - | (620) | - | - |
| | 2 | LFP | 2.8 | 163 | nitrocellulose based resin | 60:40 | 410 | 5.6 | 79 |
| | 3 | LFP | 2.8 | 265 | - | - | (1100) | - | - |
| Comparative Example | 4 | LFP | 6.6 | 265 | - | - | (1100) | - | - |
| | 5 | LFP | 2.8 | 265 | PAI based resin | 38:62 | 850 | 4.2 | 84 |
| | 6 | LFP | 2.8 | 265 | nitrocellulose based resin | 60:40 | 770 | 5.6 | 83 |
| | 7 | LFP | 2.8 | 265 | PVDF resin | 70:30 | 680 | 3.3 | 99 |
| | 8 | LFP | 2.8 | 265 | chitosan based resin | 67:33 | 940 | 3.6 | 66 |
| | 9 | LFP | 2.8 | 265 | nitrocellulose based resin | 67:33 | 470 | 5.0 | 43 |

### <Tensile Strength of Aluminum Foil>

The tensile strength of the aluminum foil before forming the conductive resin layer was measured using the Instron tension tester AG-10kNX, manufactured by Shimadzu Corporation. Measurement was performed with a gauge length of 50 mm, and at a crosshead speed of 10 mm/min. The results are shown in Table 1.

### <Indentation Hardness of Current Collector>

The indentation hardness (H_{IT}) was measured using the ultramicro indentation hardness tester ENT-2100, available from ELIONIX INC. The measurement load was 5 mN. The results are shown in Table 1. Here, with respect to the indentation hardness of the aluminum foil current collector having the conductive resin layer, the surface with the conductive resin formed thereon was measured.

### <Particle Diameter of Conductive Material>

Laser diffraction/scattering particle size distribution analyzer LA-950V2, available from HORIBA. LTD. was used for the measurement. Here, the measurement was performed by taking the refractive index of carbon black particles as 2.00 to 0.40i. The results are shown in Table 1.

### <Area Occupying Ratio of Conductive Particles>

The area occupying ratio of the conductive particles at the surface of the conductive resin layer of the current collector was measured by using the digital microscope (VH-Z100 lens was used with VHX-500 available from KEYENCE CORPORATION). Here, the image taken with the magnification of 1000 was subjected to binarization processing by the brightness, and the area occupying ratio of the dark portion (portion where the carbon exist) was measured. The area occupying ratio of the conductive particles at the surface of the conductive resin layer of the current collector was regarded as acceptable when the value of the area occupying ratio was 45% or higher.

### <Particle Diameter of Positive Electrode Active Material>

Laser diffraction/scattering particle size distribution analyzer LA-950V2, available from HORIBA. LTD. was used for the measurement.

### <Packing Density of Electrode>

The active material slurry was coated on the current collector and was then dried. Then, roll pressing was performed with a linear pressure of 150 kg/cm to obtain the electrode layer having a thickness of approximately 60 µm. With this electrode layer, weight and thickness was measured to calculate the packing density.

### <Appearance After Pressing Process>

Occurrence or non-occurrence of surface defects such as a wavy streamline was evaluated for the electrode structure after the pressing process, by visual observation. Here, when the surface defect occurred, the result was recorded as "wavy streamline", and was regarded as unacceptable. The results are shown in Table 2.

### <Electrode Resistance>

Positive electrode plate before assembling the battery as the initial positive electrode plate, and the positive electrode plate taken out from the battery after the cycle test as the positive electrode after durability test were subjected to measurement. Measurement was performed using "Loresta-AX" available from Mitsubishi Chemical Analytech Co., Ltd., by the two-terminal method. Here, the positive electrode plate taken out after the cycle test was rinsed with acetone, followed by drying under vacuum (100°C x 10h), and was then subjected to resistance measurement. The results are shown in Table 2. Here, the acceptable resistance for the initial positive electrode plate and the acceptable resistance for the positive electrode plate after the cycle test were 250Ω or lower and 600Ω or lower, respectively. The conditions for the cycle test are shown in Table 4.

### <High Rate Characteristics>

The monolayer laminated battery was used to evaluate the initial high rate characteristics and the high rate characteristics after the cycle test (300 cycles). The conditions for the high rate characteristics test and the cycle test are shown in Tables 3 and 4.

In addition, the high rate characteristics were obtained as follows. Discharging and charging of the battery was conducted at a testing temperature of 25°C, at 2 rates of 0.2C and 10C. Then, the high rate characteristics were calculated as the discharge capacity at 10C, based on the discharge capacity at 0.2C (100%). The acceptable initial discharge capacity (%) at 10C and the discharge capacity (%) after the cycle test at 10C were 80% or higher and 70% or higher, respectively.

**[Table 2]**

| | | evaluation results | | | | | |
|---|---|---|---|---|---|---|---|
| | | electrode structure | | monolayer laminated battery | | | |
| | | packing density of positive electrode g/cm³ | appearance after pressing | electrode resistance | | high rate characteristics | |
| | | | | initial | after durability test | initial | after durability test |
| | No. | | | Ω | Ω | | |
| | 1 | 2.21 | no deformation | 74 | 88 | 92% | 86% |
| | 2 | 2.22 | no deformation | 52 | 120 | 94% | 83% |
| | 3 | 2.15 | no deformation | 48 | 55 | 93% | 88% |
| | 4 | 2.18 | no deformation | 58 | 59 | 93% | 86% |
| Example | 5 | 2.23 | no deformation | 57 | 62 | 94% | 88% |
| | 6 | 2.13 | no deformation | 110 | 160 | 90% | 81% |
| | 7 | 2.20 | no deformation | 65 | 71 | 81% | 70% |
| | 8 | 2.17 | no deformation | 220 | 310 | 82% | 75% |
| | 9 | 2.21 | no deformation | 66 | 580 | 94% | 72% |
| | 1 | 1.94 | wavy streamline | 310 | 1800 | 79% | 57% |
| | 2 | 1.91 | wavy streamline | 58 | 74 | 93% | 87% |
| | 3 | 2.15 | no deformation | 450 | 2300 | 78% | 55% |
| Comparative Example | 4 | 2.20 | no deformation | 140 | 2600 | 74% | 52% |
| | 5 | 2.17 | no deformation | 280 | 1600 | 83% | 64% |
| | 6 | 2.20 | no deformation | 310 | 1600 | 81% | 65% |
| | 7 | 2.18 | no deformation | 200 | 1300 | 84% | 65% |
| | 8 | 2.19 | no deformation | 440 | 1600 | 81% | 61% |
| | 9 | 2.21 | no deformation | 220 | 770 | 84% | 68% |

[Table 3]

**Table 3 (method for high rate characteristics test)**

| | |
|---|---|
| (method of charging) | (method of discharging) |
| Charging mode: constant current and constant voltage (CC-CV) mode | Discharging mode: constant current (CC) mode |
| Constant current: 0.2C | Constant current: 0.2C and 10C |
| Charging voltage: 4.0V | Conditions for terminating discharging: voltage reaches 2.5V |
| Conditions for terminating charging: current during constant volume being 0.05C or less | |
| (testing temperature): 25°C (battery maintained in thermostatic chamber) | |

[Table 4]

**Table 4 (method for cycle test)**

| | |
|---|---|
| (number of cycles): 1C x 300 cycles | |
| (method of charging) | (method of discharging) |
| Charging mode: constant current and constant voltage (CC-CV) mode | Discharging mode: constant current (CC) mode |
| | Constant current: 1C |
| Constant current: 1C | Conditions for terminating discharging: voltage reaches 2.5V |
| Charging voltage: 4.0V | |
| Conditions for terminating charging: current during constant volume being 0.05C or less | |
| (testing temperature): 25°C (battery maintained in thermostatic chamber) | |

In Examples 1 to 9, all of the initial batteries had low electrode resistance, and were high in high rate characteristics. In addition, the electrode resistance were low and the high rate characteristics were high even after the durability test (cycle test), achieving superior durability.

With Examples 1 to 9, a very superior electrode resistance and high rate characteristics were obtained.

In Comparative Example 1, the electrode structure deformed when pressing process was performed, and the density of the electrode layer could not be increased.

In Comparative Example 2, the electrode structure deformed when pressing process was performed, and the density of the electrode layer could not be increased.

In Comparative Example 3, it was unable to lower the resistance. Accordingly, the initial electrode resistance and the electrode resistance after the cycle test were high, and the initial high rate characteristics and the high rate characteristics after the cycle test were inferior. In addition, durability was low.

In Comparative Example 4, the initial high rate characteristics and the high rate characteristics after the cycle test were inferior.

In Comparative Example 5, it was unable to lower the resistance. Accordingly, the initial electrode resistance and the electrode resistance after the cycle test were high, and the high rate characteristics after the cycle test was inferior. In addition, durability was low.

In Comparative Example 6, it was unable to lower the resistance. Accordingly, the initial electrode resistance and the electrode resistance after the cycle test were high, and the high rate characteristics after the cycle test was inferior. In addition, durability was low.

In Comparative Example 7, the electrode resistance after the cycle test was high, and the high rate characteristics after the cycle test was inferior. In addition, durability was low.

In Comparative Example 8, it was unable to lower the resistance. Accordingly, the initial electrode resistance and the electrode resistance after the cycle test were high, and the high rate characteristics after the cycle test was inferior. In addition, durability was low.

In Comparative Example 9, the electrode resistance after the cycle test was high, and the high rate characteristics after the cycle test was inferior. In addition, durability was low.

### EXPLANATION OF SYMBOLS

- 100:: current collector
- 102:: aluminum foil
- 103:: conductive resin layer
- 105:: active material layer
- 110:: electrode structure
- 115:: conductive particles
- 116:: resin layer
- 120:: active material particles

## Claims

1. A current collector, comprising:
an aluminum foil; and
a conductive resin layer provided on at least one side of the aluminum foil; wherein
the conductive resin layer comprises a resin and conductive particles;
the aluminum foil has a tensile strength of 180MPa or higher;
an indentation hardness at a surface of the conductive resin layer of the current collector is 600MPa or lower; and
an area occupying ratio of the conductive particles at the surface of the conductive resin layer is 45% or higher.

2. The current collector of Claim 1, wherein:
the conductive particles aggregate in the conductive resin layer to form secondary particles; and
median size of the secondary particles is 1 to 10µm.

3. The current collector of Claim 1 or 2, wherein the conductive particles are carbon particles.

4. An electrode structure, comprising:
the current collector of any one of Claims 1 to 3; and
an active material layer or an electrode material layer provided on the conductive resin layer of the current collector, the active material layer or the electrode material layer containing active material particles; wherein
the median size of the active material particles is 5µm or less.

5. The electrode structure of Claim 4, wherein the active material particles comprise olivine type lithium phosphate.

6. A non-aqueous electrolyte battery or an electrical storage device, comprising the electrode structure of Claim 4 or 5.
